# EUROPEAN PATENT APPLICATION

(11) **EP 2 058 963 A1**
(43) Date of publication of application: **13.05.2009**
(21) Application number: 07291334.6
(22) Date of filing: 07.11.2007
(51) Int. Cl.: H04B 10/17, H04J 14/02

(54) **Method controlling optical amplifiers**

(71) Applicant: LUCENT TECHNOLOGIES INC., Murray Hill NJ 07974-0636 (US)
(72) Inventor: Lutz Raddatz, DE-90491 Numberg (DE)
(74) Representative: LOUIS, PÖHLAU, LOHRENTZ

(57) **Abstract**

The invention concerns a method of controlling optical amplifiers (OA3, OA4) at two or more nodes (A, B, C, D) of a wavelength division multiplex network, and a node (A, C) to execute this method. The two or more nodes (A, B, C, D) are connected to each other via links (L1, L2, L3) comprising at least two wavelength channels. A channel map is stored at a first node (A) and at least one second node (C) of said two or more nodes (A, B, C, D). At the first node (A), a link failure (X) of one of said links (L1) is detected. Said link failure (X) is communicated to the at least one second node (C). At the first node (A) and the at least one second node (C), it is determined from said locally stored channel map which wavelength channels are affected by said link failure (X). Said optical amplifiers (OA3, OA4) are adjusted at the first node (A) and the at least one second node (C) so that an amplification of wavelength channels which are not affected by said link failure (X) remains within a pre-set margin.

## Description

The present invention relates to a method of controlling optical amplifiers at two or more nodes of a wavelength division multiplex network, and a node to execute this method.

Wavelength division multiplexing (= WDM) is a well-known technology for expanding the transmission capacity of an optical fibre link by transmitting several channels at different wavelengths over one fibre. An additional benefit of this technology is that by employing optical amplifiers, the distance bridgeable without having to regenerate the signal electrically can be extended dramatically. The optical amplifiers have sufficient bandwidth to amplify many channels.

Terrestrial dense WDM systems are available with up to 160 channels, with a data rate per channel of up to 40 Gbit/s, and with transmission distances up to 4000 km. In addition, such systems support re-configurable optical add/drop multiplexers (= ROADM) of degree 4 and higher. The degree describes the number of bi-directional fibre connections that can be connected to the ROADM, and which channels can be switched to transparently, i.e. without optical-electrical-optical regeneration, from any other connection. WDM systems with ROADMs of degree three and higher are called meshed networks.

One important consideration for such meshed networks is their resilience against transients in the optical power. Such transients can occur during normal operation, e.g., when channels are added or deleted. The more critical case however is when either fibres are cut accidentally or the electrical power to a node is lost. This means the critical case is when channels on a WDM line disappear.

Consider a network where a node A is a degree III (three) ROADM which has connections to nodes B, C, and D and active channels on all these connections. If, for instance, the connection A <-> B is suddenly interrupted, channels provisioned for the link B -> A -> C disappear, and on the section A -> C only the channels provisioned for the link D -> A -> C remain. The optical amplifiers on the section A -> C now have to be adjusted quickly to the reduced channel count, since incorrect amplifier settings of the optical amplifiers can lead to signal degradation and bit errors which must be avoided.

Transients can be handled, e.g., by setting a pump laser of EDFA or Raman amplifiers according to the new situation, or by controlling a laser on a spare signal wavelength in such a way that the total power into the amplifier changes as little as possible as a consequence of the transient (EDFA = Erbium Doped Fibre Amplifier).

Optical monitors (spectrum analysers) can provide data on the channels present and their respective power levels. They are however too slow to be useful in case of fast transients: Their response time is often ∼ 100 ms. In addition, these devices are shared among several monitor ports due to their high cost, so that an optical switch has to be operated before a reading can be made.

Monitor photodiodes at the input and output of the optical amplifiers can be used to determine the current input and output power values. These photodiodes are sufficiently fast to track a transient, e.g., due to a fibre cut. However, they can only provide information on the total power, not resolved for wavelength/ channel.

There are additional problems in handling transients:
a) WDM channels may interact with each other, e.g., due to the Raman effect. This non-linear effect causes optical power to be transferred from lower-wavelength channels to higher-wavelength channels.
b) Systems are often designed to use a "channel pre-emphasis", i.e., different power levels for certain channels, e.g., for channels at different wavelengths, for channels of different bit rates, or channels provisioned for different transmission distances in the mesh network.
c) Raman-based amplifiers require several pump wavelengths to amplify the typical wavelength ranges used in WDM systems.

In order to handle a transient "perfectly", an optical amplifier would need to know exactly which channels have disappeared, which channels are still present (so-called "surviving" channels), and what their respective power levels are. This information must be available as soon as possible during or after the transient. Excursions of the per channel power of the surviving channels should be as short and as small as possible. In particular, protection switch activities due to loss-of-frame alarms (raised typically after 3 ms) must be avoided.

As mentioned in the previous sections, this is difficult to achieve: monitor photodiodes are fast enough, but cannot supply spectrally resolved (per channel) power. Spectrum analyser based optical monitors are to slow to use in transient control. The same may apply to tone detection schemes, i.e., the evaluation of low frequency pilot channels modulated on the WDM channels. Using a laser to keep the total optical power constant wastes a wavelength of the system, i.e., reduces its capacity.

It is the object of the present invention to improve the control of an optical amplifier in case of a transient.

The object of the present invention is achieved by a method of controlling optical amplifiers at two or more nodes of a wavelength division multiplex network whereby the two or more nodes are connected to each other via links comprising at least two wavelength channels, whereby the method comprises the steps of storing a channel map at a first node and at least one second node of said two or more nodes, detecting, at the first node, a link failure of one of said links, communicating said link failure to the at least one second node, determining, at the first node and the at least one second node, from said locally stored channel map which wavelength channels are affected by said link failure, and, adjusting, at the first node and the at least one second node, said optical amplifiers so that an amplification of wavelength channels which are not affected by said link failure remains within a pre-set margin. And the object of the present invention is further achieved by a node of a wavelength division multiplex network comprising two or more nodes connected to each other via links comprising at least two wavelength channels, the node comprising a control unit for controlling optical amplifiers at said node, the control unit comprising a memory adapted to store a channel map at said node, and a processing function adapted to detect a link failure of one of said links, communicate said link failure to at least one second node of the wavelength division multiplex network, determine from said locally stored channel map which wavelength channels are affected by said link failure, and adjust said optical amplifiers so that an amplification of wavelength channels not affected by said link failure remains within a pre-set margin.

The channel map comprises information on the wavelength channels present, i.e., working or actively used/operated, in the network. It is preferable that the channel map also comprises information on target power levels, i.e., preferable power levels, of the wavelength channels. Preferably, the channel map comprises an association of the wavelength channels with the links, e.g., an indication which wavelength channels are contained in one of the links. Preferably, the channel map is propagated through the network to the nodes and used to calculate pre-calculated settings of the optical amplifiers. Further, the channel map may be updated after a change of the network configuration in order to reflect the current network configuration, e.g., if wavelength channels disappear due to an equipment failure or a fibre break.

The invention represents a technique for reducing the impact of and improving the recovery from transients in (meshed) wavelength division multiplexing networks.

Generally, it is not easy to detect which wavelength channels have "survived" the link failure. In the prior art, there may be a significant delay until the surviving channels have been detected. The present invention avoids this time delay by use of a channel map. The channel map immediately provides the information which wavelength channel are affected by a failure of a specific link.

The invention provides an improved technique to provide control input for the optical amplifiers. The invention makes use the knowledge of the channel population in the different sections, e.g., links, of the network to determine the spectrum of "surviving channels". Moreover, the invention provides that no wavelength channel is wasted.

The transient control of Raman amplifiers may be especially difficult since the Raman gain of a single pump wavelength only covers a part of the usual WDM spectrum, and hence several pump wavelengths are typically used. Knowledge about which wavelengths are occupied by the surviving channels is therefore critical to control these Raman amplifiers. Therefore, the invention especially improves the transient control of Raman amplifiers.

Since the information about the link failure can be transmitted to neighbouring nodes, i.e., the second nodes, the optical amplifier settings at these neighbouring nodes can also be optimised using this information. Note that it is sufficient to transmit information on which link or link section has failed and not on all the wavelength channels that have failed, since the latter information can be derived from the channel map which is known to all nodes.

Further advantages are achieved by the embodiments of the invention indicated by the dependent claims.

According to a preferred embodiment of the invention, the node pre-calculates, before the detection of the link failure, one or more settings of the optical amplifiers based on the channel map. Each of the pre-calculated one or more settings corresponds to a possible failure of a different link. The node may be a first node, i.e., a node which detects a link failure itself. Alternatively, the node may be a second node, i.e., a node which does not detect the link failure itself but is informed about the link failure by another node, e.g., a first node or another second node. In the first case, i.e., the node being a first node, the node selects one or more of said pre-calculated settings corresponding to the detected link failure after the node has detected the link failure. In the latter case, i.e., the node being a second node, the node selects one or more of said pre-calculated settings corresponding to the communicated link failure after the node has been communicated the link failure.

Then, the first node and the at least one second node adjust the optical amplifiers according to the one or more selected pre-calculated settings. Preferably, the pre-calculated settings for the optical amplifiers and other optical components are stored at the nodes and can be used as target values for quick recovery of the network in case of a channel loss, i.e., a transient. The techniques described in prior art are designed to support the establishment of channels within the network during the set-up phase or to react to changes of the optical power at monitor ports of amplifiers etc, i.e., getting started after the detection of a link failure. The present invention, however, introduces a pre-calculation of possible changes to the WDM optical spectrum caused by transients. The pre-determination of changes and responses increases the speed of reaction to a transient. Therefore, the recovery from power transients due to failures in parts of the network is accelerated.

According to another preferred embodiment of the invention, the adjustment of the optical amplifiers may be performed in two ways: by controlling a total amplification gain enacted by the optical amplifiers; by controlling wavelength specific amplification parameters of the optical amplifiers. It is also possible that the two variants are used together. With the former type, the total amplification gain represents the amplification gain integrated over all wavelength channels not affected by said link failure, i.e., all wavelength channels handled by the amplifier after the link failure. With the latter type, the amplification gain enacted by the one or more optical amplifier of the node is controlled in a wavelength-specific manner, e.g., taking into account each channel individually.

According to another preferred embodiment of the invention, the node communicates said link failure to another node by indicating a link affected by said link failure and/or an identifier of a group of wavelength channels affected by said link failure. From the indication of the link where the link failure has happened, the node determines the wavelength channels affected by said link failure by means of the channel map. It is also possible that the wavelength channels are grouped into channel groups. The channel map comprises an indication of the wavelength channels associated with a channel group. From the identifier of the channel group affected by said link failure, the node determines the wavelength channels affected by said link failure by means of the channel map.

In a preferred embodiment, the node, e.g., a first node or a second node, communicates said link failure to one or more second nodes downstream. Downstream means the direction of data streams in the wavelength channels affected by the link failure.

According to another preferred embodiment of the invention, the node transmits the communication of the link failure in overhead data of a wavelength channel. One possible solution could be to transmit the communication of the link failure in overhead bytes, e.g., in an OTN frame structure of a supervisory channel which can be accessed in real time (OTN = Optical Transport Network). OTN uses relatively short frames so that the communication of the link failure can be quickly transmitted.

Preferably, the one or more nodes adjust the optical amplifiers both at an input and an output of the nodes. The input of the node is the interface/port where the transmitted data enter the node, the output of the node is the interface/port where the transmitted data leave the node.

Preferably, monitor photodiodes located at the optical amplifiers determine measurement values associated with the wavelength channels, e.g., a power value of one or more individual wavelength channels and/or a total power value integrated over a plurality of wavelength channels. These measurement values are supplied as input to the first node and the at least one second node where they are used as additional control related data for the control of the optical amplifiers.

It is also possible that the processing function is implemented as a computer program product. Thus, the processing function may be implemented as a software extension to an existing control software governing the control unit of said node. Thus, the invention means little hardware effort.

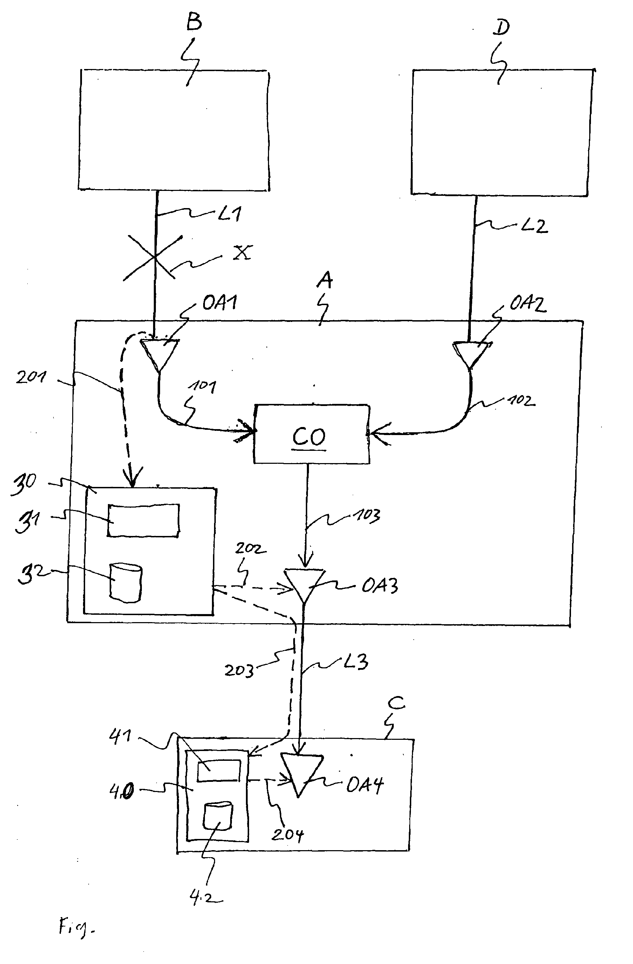

These as well as further features and advantages of the invention will be better appreciated by reading the following detailed description of presently preferred exemplary embodiments taken in conjunction with the accompanying drawing which is a block diagram of a WDM network according to an embodiment of the invention.

The Figure shows a WDM network comprising network nodes A, B, C, and D which are connected to each other by means of links L1, L2, and L3, e.g., optical fibre cables. Each of the links L1, L2, and L3 is used for the transmission of two or more wavelength channels. The node A is a degree three ROADM which has the link L1 with the node B, the link L2 with the node D, and the link L3 with the node C and active channels on all these links L1 to L3.

The node B sends data via the node A to the node C. The node D sends data via the node A to the node C. The connection node B -> node A -> node C carries ten channels 1, 2, ..., 10, and the connection node D -> node A -> node C carries ten channels 11, 12, .., 20.

At an input port of the link L1 to the node A, the channels 1, 2, ..., 10 of the link L1 from the node B are amplified by an optical amplifier OA1 of the node A. At an input port of the link L2 to the node A, the channels 11, 12, ... , 20 of the link L2 from the node D are amplified by an optical amplifier OA2 of the node A. The amplified channels 1, 2, ..., 10 are transmitted via an internal connection 101 to a combination unit CO of the node A. Likewise, the amplified channels 11, 12, ..., 20 are transmitted via an internal connection 102 to the combination unit CO of the node A.

The combination unit CO combines the wavelength channels 1, 2, ... , 10 originating from the node B and the wavelength channels 11, 12, ... , 20 originating from the node D to combined wavelength channels 1, 2, ... , 19, 20. After the combination of the wavelength channels, the combined wavelength channels 1, 2, ..., 19, 20 are transmitted via an internal connection 103 to an optical amplifier OA3 of the node A.

The link L3 connects the optical amplifier OA3 via the network to the node C. The combined wavelength channels 1, 2, ... , 19, 20 are transmitted via the link L3 to the node C. At an input port of the link L3 to the node C, the combined channels 1, 2, ... , 19, 20 of the link L3 from the node A are amplified by an optical amplifier OA4 of the node C.

Let us assume that the connection node A <-> node B is suddenly interrupted by a link failure X of the link L1, e.g., due to a fibre break or a power failure in node B. The channels 1, 2, ... , 10 provisioned for the connection node B -> node A -> node C disappear, and on the section node A -> node C only the channels 11, 12, ... , 20 provisioned for the connection node D -> node A -> node C remain.

Since incorrect amplifier settings can lead to signal degradation and bit errors, the power per channel that is applied by the amplification processes on the section node A -> node C must remain unchanged. Therefore, the optical amplifiers OA3 and OA4 on the section node A -> node C now have to be adjusted quickly to the reduced channel count.

An input monitor of the link L1 at the node A registers the down-transient X, and sends a message 201 to a control unit 30 of the node A. The control unit 30 determines that this section node A <-> node B has had a catastrophic failure X. The control unit 30 therefore "knows" that only channels 11, 12, ..., 20 are left (= surviving), and can determine measures to adjust the amplifier OA3 at the node A accordingly.

The node C also comprises a control unit 40, comparable to the control unit 30 of the node A. Before the occurrence of the failure X of the link L1, the control units 30, 40 store a channel map into respective memories 32, 42 of the control units 30, 40. The channel map comprises an indication which wavelength channels are contained in each of the links L1, L2, L3 in the network, and the target power levels of the wavelength channels. For instance, the channel map specifies that the channels 1, 2, ..., 10 are contained in the link L1 between the node B and the node A, the channels 11, 12, ... , 20 are contained in the link L2 between the node D and the node A, and the channels 1, 2, ..., 19, 20 are contained in the link L3 between the node A and the node C.

The central idea of this invention is to use the channel map, e.g., the knowledge of the channel population in the different sections of the network, to determine the spectrum of "surviving channels" of a catastrophic failure in a part of the network. This information can be used to pre-calculate settings of amplifiers and other optical components. These settings can be used to as target values for quick recovery of the system if such a catastrophic failure occurs.

According to the drawing, the control unit 30 detects the failure X by means of the data received from the input monitor of the link L1, the monitor being located at the optical amplifier OA1. The control unit 30 communicates the link failure X downstream, i.e., to the control unit 40 of the node C, e.g., by means of a message 203 sent, e.g., in overhead data of a wavelength channel. Thus, the node A represents a first node, and the node C represents a second node.

Each of the control units 30, 40 comprises a respective processing function 31, 41. The processing function 31 of the control unit 30 determines from the channel map stored in the memory 32 which wavelength channels are affected by said link failure X. Likewise, the processing function 41 of the control unit 40 determines from the channel map stored in the memory 42 which wavelength channels are affected by said link failure X.

The processing functions 31, 41 can also be used for pre-calculating one or more settings of the optical amplifiers OA3, OA4 wherein each of the pre-calculated settings corresponds to a different failure scenario, e.g., a failure of a different link. For example, the node C can have pre-calculated set points for its amplifier OA4 for both the case when the connection node B -> node A fails and when the connection node D -> node A fails. For the pre-calculation of the pre-calculated settings, the processing functions 31, 41 can use an amount of time which is long compared to the amount of time that is available for conducting response steps after a detection of a failure.

With this knowledge, the processing functions 31, 41 determine, preferably by consulting the pre-calculated settings, the suitable adjustments that are to made at the respective optical amplifiers OA3, OA4. An adjustment is suitable if an amplification of the wavelength channels which are not affected by said link failure X remains within a pre-set margin. Preferably, the adjustment is chosen such that a power per channel transmitted to each of the wavelength channels by the optical amplifiers OA3, OA4 is the same - with a pre-defined tolerance range - after the failure X than before the failure X. The processing functions 31, 41 generate adjustment commands 202, 204 which are sent to the respective optical amplifiers OA3, OA4. Monitor photodiodes at the different amplifiers OA3, OA4 may also be used to create additional control input for the control units 30, 40.

The node C may again communicate the failure X to another node downstream, such forming a communication chain comprising the node A as first node, and the node C and the other node as second nodes. This communication chain may be further continued.

Each of the control units 30, 40 is composed of one or several interlinked computers, i.e., a hardware platform, a software platform basing on the hardware platform and several application programs executed by the system platform formed by the software and hardware platform. The functionalities of the control units 30, 40 are provided by the execution of these application programs. The application programs or a selected part of these application programs, e.g., the processing functions 31, 41, constitute a computer software product providing an amplification control service as described above, when executed on the system platform. Further, such computer software product is constituted by a storage medium, e.g., the memories 32, 42, storing these application programs or said selected part of application programs.

## Claims

1. A method of controlling optical amplifiers (OA3, OA4) at two or more nodes (A, B, C, D) of a wavelength division multiplex network whereby the two or more nodes (A, B, C, D) are connected to each other via links (L1, L2, L3) comprising at least two wavelength channels, the method comprising the steps of:
storing a channel map at a first node (A) and at least one second node (C) of said two or more nodes (A, B, C, D);
detecting, at the first node (A), a link failure (X) of one of said links (L1); communicating said link failure (X) to the at least one second node (C); at the first node (A) and the at least one second node (C), determining from said locally stored channel map which wavelength channels are affected by said link failure (X); and
at the first node (A) and the at least one second node (C), adjusting said optical amplifiers (OA3, OA4) so that an amplification of wavelength channels which are not affected by said link failure (X)
remains within a pre-set margin.

2. The method of claim 1,
**characterised in**
**that** the method further comprises the steps of:
before the detection of the link failure (X), pre-calculating one or more settings of the optical amplifiers (OA3, OA4) based on the channel map, each of the one or more settings corresponding to a possible failure of a different link (L1, L2, L3);
after the detection of the link failure (X) and the communication of the link failure (X), respectively, selecting one or more of said pre-calculated settings corresponding to the link failure (X) at said first node (A) and the at least one second node (C); and
at said first node (A) and the at least one second node (C), adjusting the optical amplifiers (OA3, OA4) according to the one or more selected pre-calculated settings.

3. The method of claim 1,
**characterised in**
**that** the method comprises the step of:
performing said adjustment of the optical amplifiers (OA3, OA4) by controlling a total amplification gain enacted by the optical amplifiers (OA3, OA4), the total amplification gain being integrated over all wavelength channels not affected by said link failure (X), and/or by controlling wavelength specific amplification parameters of the optical amplifiers (OA3, OA4).

4. The method of claim 1,
**characterised in**
**that** the method comprises the step of:
communicating said link failure (X) by indicating a link (L1) affected by said link failure (X) and/or an identifier of a group of wavelength channels affected by said link failure (X).

5. The method of claim 1,
**characterised in**
**that** the method comprises the step of:
communicating said link failure (X) to one or more second nodes (C) downstream.

6. The method of claim 1,
**characterised in**
**that** the method comprises the step of:
transmitting the communication of the link failure (X) in overhead data of a wavelength channel.

7. The method of claim 1,
**characterised in**
**that** the method comprises the step of:
at the first node (A) and the at least one second node (C), adjusting the optical amplifiers (OA3, OA4) both at an input and an output of the nodes (A, C).

8. The method of claim 1,
**characterised in**
**that** the method further comprises the step of:
supplying additional control related data to the first node (A) and the at least one second node (C) by using input data from monitor photodiodes located at the optical amplifiers (OA3, OA4).

9. A node (A, C) of a wavelength division multiplex network comprising
two or more nodes (A, B, C, D) connected to each other via links (L1, L2, L3) comprising at least two wavelength channels,
the node (A, C) comprising a control unit (30, 40) for controlling optical amplifiers (OA3, OA4) at said node (A, C),
the control unit (30, 40) comprising a memory (32, 42) adapted to store a channel map at said node (A, C),
and a processing function (31, 41) adapted to detect a link failure (X) of one of said links (L1),
communicate said link failure (X) to at least one second node (C) of the wavelength division multiplex network,
determine from said locally stored channel map which wavelength channels are affected by said link failure (X), and
adjust said optical amplifiers (OA2, OA4) so that an amplification of wavelength channels not affected by said link failure (X) remains within a pre-set margin.

10. The node (A, C) of claim 9,
**characterised in**
**that** the processing function (31, 41) is implemented as a software extension to an existing control software of said node (A, C).
